# EUROPÄISCHE PATENTSCHRIFT

(11) **EP 2 113 413 B1**
(45) Veröffentlichungstag und Bekanntmachung des Hinweises auf die Patenterteilung: **05.09.2018**
(21) Anmeldenummer: 09000990.3
(22) Anmeldetag: 24.01.2009
(51) Int. Cl.: B62D 21/14, B62D 21/20

(54) **Fahrzeugchassis für insbesondere Container, Aufbauten und dergleichen Ladungsbehälter**
Vehicle chassis for in particular containers, structures and similar load containers
Châssis de véhicule notamment pour un conteneur, des montages et des supports de charge analogues

(30) Priorität: 30.04.2008 DE 102008021795
(43) Veröffentlichungstag der Anmeldung: 04.11.2009
(73) Patentinhaber: Fahrzeugwerk Bernard Krone GmbH, 48480 Spelle (DE)
(72) Erfinder: Krone, Bernard, 48480 Spelle (DE); Sasse, Uwe, 49716 Meppen (DE); Papenbrock, Gerhard, 49740 Haselünne (DE)
(74) Vertreter: Pott, Ulrich

(56) Entgegenhaltungen:
- EP-A- 1 486 375
- EP-A- 1 488 990
- EP-A- 1 500 579
- DE-A1- 10 145 432

## Beschreibung

Die Erfindung bezieht sich auf ein Fahrzeugchassis für insbesondere Container, Aufbauten oder dergleichen Ladungsbehälter in einer Ausgestaltung gemäß dem Oberbegriff des Patentanspruches 1.

Fahrzeugchassis der vorgenannten Art zum Transport von Containern unterschiedlicher Größe sind bekannt. Container, die auf solchen Fahrzeugchassis zu transportieren sind, sind beispielsweise 20 Fuß-Container in üblicher genormter Gestaltung, aber auch 45 Fuß-Container als sogenannte Iso-Container oder sogenannte Geest-Container.

Aus der DE 10 2005 050 928 A1 ist ein Fahrzeugchassis bekannt, bei dem der vordere Laderahmenholm zu verstellen ist und über besondere Sicherungsmittel zur Verriegelung von Containern verfügt. Fahrzeugchassis mit einem solchen vorderen bewegbaren Laderahmenholm haben üblicherweise auch einen rückwärtigen Heckfahrgestellholm, der für einen zusätzlichen Heckausschub ebenfalls relativ zu dem Fahrgestell zu bewegen ist. Fahrgestell und Laderahmen sind zu einer Längenveränderung des Fahrzeugchassis zudem von der Zugmaschine gegeneinander zu verfahren bzw. auseinander zu ziehen. Insgesamt können damit die gewünschten unterschiedlichen Fahrzeugchassislängen und ein unterschiedlicher Radstand eingestellt werden.

Neben der Einstellung der Relativlage zwischen Laderahmen und Fahrgestell durch das Zugfahrzeug sind darüber hinaus Hubzylinder einer Stelleinrichtung vorgesehen, über die der vordere Laderahmenholm und der rückwärtige Fahrgestellholm zu bewegen sind. Dazu ist es erforderlich, daß durch die Bedienperson eine exakte Länge angesteuert wird. Ist die Fahrzeugchassislänge durch eine Verfahrbewegung eines Zugfahrzeuges einzustellen, ist das Zugfahrzeug entsprechend genau durch den Fahrer zu positionieren. Dies ist insgesamt zeitaufwändig und erfordert Nachpositionierarbeiten.

Aus der EP 1 486 375 A ist eine längenveränderbares Containerchassis bekannt, bei dem ein Ladeoberrahmen mit dem Fahrgestellrahmen über die pneumatische Federung des Fahrgestells höhenverstellbar zu gestalten ist. Eine tiefere Position ist auch für HC-Container geeignet. Nur in einer höheren Position, in welcher die Unterkanten der Querträger des Lade- oder Oberrahmens höher liegen als die Oberkanten der Kotflügelanordnungen ist eine Längsverschiebung des Ladeoberrahmens gegenüber demFahrgestellrahmen möglich. Zur Absenkung bzw. zur Höhenveränderbarkeit wird über eine Ventilanordnung der pneumatischen Federung des Fahrgestells der Fahrgestellrahmen und der Ladeoberrahmen mit Container auf eine Verschiebehöhe angehoben. Über die Bremsanlage kann auf Rangierbetrieb mit Blockaderäder abgestellt werden, wobei eine Arretierung zwischen Ladeoberrahmen und Fahrgestellrahmen gelöst wird. Danach kann zur Veränderung der Fahrzugchassislänge das Zugfahrzeug vorgefahren werden, wonach der Ladeoberrahmen gegenüber dem Fahrgestellrahmen in einer anderen Betriebsposition verriegelt werden kann. Danach ist die Ventilanordnung der Fahrgestellrahmen mit Ladeoberrahmen und Container in eine tiefere Fahrposition abzusenken. Der hierfür erforderliche Aufwand ist erheblich und erfordert wiederum ein exaktes Anfahren einer Position für größere Längen des Fahrzeugchassis durch die Bedienperson, um die Verriegelung in der zweiten Betriebsposition sicherstellen zu können.

Aus der gattungsgemäßen DE 101 45 432 A1 ist ein Transportanhänger für den Transport für Container bekannt mit einem Fahrwerk sowie einem an den Fahrwerk befestigten Hauptträger, an dem Frontträger und Heckträger befestigt sind. Die Frontträger und die Heckträger sind über Übertragungsmittel derart gekoppelt, dass beim Verfahren des Frontträgers relativ zum Hauptträger der Heckträger in eine entgegengesetzte Richtung gekoppelt wird und umgekehrt. Damit lassen sich jedoch keine Lagen des Frontträgers bzw. des Heckträgers einnehmen, die unterschiedliche Abstände zum Hauptträger einnehmen.
Es ist Aufgabe der vorliegenden Erfindung, ein Fahrzeugchassis zur Verfügung zu stellen, bei dem sich mit einem verringerten Aufwand exakt unterschiedliche Fahrzeugchassislängen einstellen lassen.
Zur Lösung dieser Aufgabe zeichnet sich das Fahrzeugchassis der eingangs genannten Art durch die im Patentanspruch 1 angegebenen Merkmale aus.

Hinsichtlich wesentlicher vorteilhafter Ausgestaltungen wird auf die Ansprüche 2 bis 9 verwiesen.

Damit ist ein Fahrzeugchassis zur Verfügung gestellt, bei dem die jeweiligen Stellungen des vorderen Laderahmenholms und/oder des hinteren Fahrgestellholms automatisch durch die Hubzylinder angefahren werden können. Die Bedienperson wählt dazu an einem Display an der Steuervorrichtung den erforderlichen Ladefall aus (z.B. 45 Fuß-Container) und kann dies durch einen Knopfdruck bestätigen. Die Positionen der Ausschübe vorne und hinten (vorderer Laderahmenholm, hinterer Fahrgestellholm) werden dann gesteuert durch die Steuervorrichtung und vom System automatisch angesteuert, wobei zunächst die Entriegelung der entsprechenden Holme ebenfalls automatisch erfolgt. Auch eine nachfolgende Verriegelung nach Erreichen der gewünschten Position kann automatisch erfolgen. Dazu sind entsprechende Ventilsteuerungen, Sensoren und dergleichen vorgesehen, die von der Steuervorrichtung entsprechende Signale erhalten bzw. und die Hubzylinder aktivieren. Die Steuervorrichtung weist einen entsprechenden Rechner auf, der den entsprechenden Soll-Ist-Zustand-Vergleich durchführt und für die Erzeugung der Signale Sorge trägt. Damit ist das Fahrzeugchassis nach der Erfindung wesentlich benutzerfreundlicher als herkömmliche Chassis, da mit diesem eine erhebliche Zeitersparnis einhergeht, wenn der Fahrer von einem Ladefall zu einem anderen Ladefall übergehen muß, da er die entsprechenden Stellungen der Teile zueinander nicht selbst ermitteln und anfahren muß. Dadurch ist die Gefahr von Fehlbedienungen wesentlich reduziert, was den Vorteil mit sich bringt, daß beim Aufsetzen eines Containers kein falsch eingestelltes Fahrzeug vorgesehen ist. Die entsprechende Verriegelung von Fahrgestellholm und Laderahmenholm kann ebenfalls durch entsprechende Sensoren geprüft werden. Dabei kann ebenfalls vorgesehen sein, daß akustische oder optische Warnsignale erzeugt werden, wenn eine ordnungsgemäße Verriegelung nicht vorliegt bzw. wenn eine Anfahrsicherung aktiviert wird, um ein Anfahren nur im korrekt verriegelten Zustand zu ermöglichen. Ist eine Positionsveränderung zwischen Fahrgestell und Laderahmen erforderlich, wird dies auch durch die Positionsgeber nach eingestelltem Ladefall detektiert und über die Steuervorrichtung angezeigt. Dann kann die Bedienperson eine entsprechende Lageveränderung durch die Zugmaschine durchführen, wobei nach Erreichen der lagegerechten Positionierung - wiederum aktiviert durch Sensoren bzw. Positionsgeber - eine automatische Verriegelung der Teile erfolgen kann.

Bevorzugtermaßen sind zur Verstellung des Laderahmenholmes und des rückwärtigen Fahrgestellholmes Tandemhubzylinderanordnungen vorgesehen, die Tandemhubzylinder aufweisen, die über eine Hubstange miteinander gekoppelt sind. Diese einander zugeordneten Tandemhubzylinder haben unterschiedliche Hublängen, und zwar solche, die für einen angestrebten Ladefall durch Verstellung des vorderen Laderahmenholmes bzw. des hinteren Fahrgestellholmes angefahren werden müssen. So läßt sich auf einfache Weise sicherstellen, daß mit derartigen Tandemhubzylindern ohne Zwischenpositionen anfahren zu müssen, insgesamt vier verschiedene Längsstellungen eines Holms eingestellt werden können, wonach nach Erreichen der entsprechenden Länge die Zylinder wiederum drucklos zu schalten sind. Diese vier Hubstellungen werden dadurch dargestellt, indem für die voll ausgefahrene Stellung eines Holms und damit für eine erhöhte Fahrgestellchassislänge beide Hubzylinder voll ausgefahren sind, in einer anderen Stellung nur einer der Hubzylinder voll ausgefahren ist, wohingegen der andere eingefahren ist und in der letzten und damit kürzesten Stellung beide Hubzylinder der Tandemhubzylinderanordnung eingefahren sind. Gleiches gilt auch für die Tandemhubzylinderanordnung eines rückwärtigen Fahrgestellholmes. Ebenfalls ist vorzusehen, daß bei einem Start der Steuerungsvorrichtung durch die Bedienperson automatisch eine Bremse aktiviert wird und ein Warnsignal ertönt.

Weitere vorteilhafte Ausgestaltungen der Erfindung ergeben sich aus der weiteren Beschreibung und der Zeichnung. In der Zeichnung zeigen:
- Fig. 1: in einer perspektivischen Darstellung ein Ausführungsbeispiel eines Fahrzeugchassis nach der Erfindung,
- Fig. 2: vergrößert den vorderen Bereich des Laderahmens des Ausführungsbeispiels nach Fig. 1, ebenfalls in einer perspektivischen Darstellung.

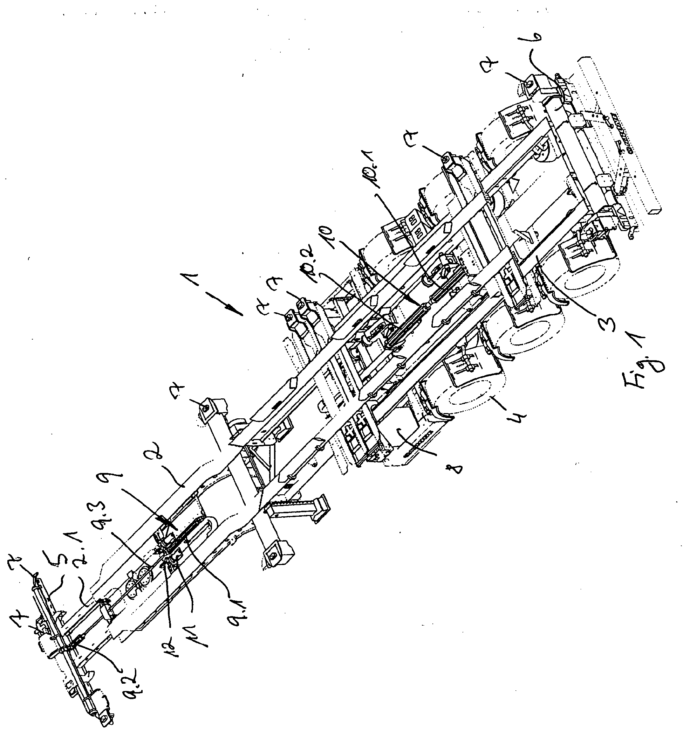

In der Zeichnung sind grundsätzlich gleichwirkende Teile mit übereinstimmenden Bezugsziffern versehen. Das Fahrzeugchassis insgesamt ist mit 1 beziffert. Dieses hat einen Laderahmen 2 und ein Fahrgestell 3, das über Räder 4 auf dem Erdboden abgestützt ist. In der gezeigten Positionierung zwischen Laderahmen 2 einerseits und Fahrgestell 3 andererseits ist eine größere Fahrzeugchassislänge eingenommen, da der Laderahmen 2 um ein gewisses Maß aus dem Fahrgestell 3 translatorisch herausbewegt wurde. Im vorderen Bereich des Laderahmens 2 ist ein sich quer zur Fahrzeugchassislängsrichtung ausgerichteter Laderahmenholm 5 vorgesehen. Dieser ist an Traversen 2.1 gehaltert, die in den Hauptteil des Laderahmens 2 einführbar sind. In dem gezeigten Ausführungsbeispiel ist der vordere Laderahmenholm 5 aus dem Laderahmen 2 herausbewegt, wie dies die herausgezogenen Längstraversen 2.1 verdeutlichen. Im heckseitigen Bereich des Fahrzeugchassis 1 ist ein sich ebenfalls quer zur Fahrzeuglängsrichtung erstreckender Fahrgestellholm 6 vorgesehen. Der Fahrgestellholm 6 ist in der Darstellung nach Fig. 1 in seinem eingefahrenen Zustand gezeigt. Für einen weiteren Heckausschub kann er jedoch noch um ein gewisses Maß aus dem Fahrgestell 3 herausbewegt werden.

Zur Sicherung von Containern sind ganz allgemein mit 7 bezifferte Sicherungsmittel 7 vorgesehen, die abwechselnd im Einsatz sind, je nachdem, welches Containermaß eingestellt ist und wie demnach der Ladefall ist. Insgesamt ist das Fahrzeugchassis, wie dargestellt, variationsreich an verschiedene Ladefälle und damit Containermaße anzupassen, wobei sich auch Ladefälle ergeben, bei der unterschiedliche Radstände zu berücksichtigen sind.

Um mit geringem Bedienaufwand automatisch verschiedene Ladefälle einstellen zu können, ist eine allgemein mit 8 vorgesehene Steuervorrichtung vorgesehen. Diese Steuervorrichtung kann auch an anderer Stelle plaziert werden bzw. kann auch Instrumente beispielsweise auch im Fahrerhaus eines Zugfahrzeuges haben. Diese Steuerungsvorrichtung ist mit nicht im einzelnen dargestellten Positionsgebern bzw -sensoren, Verriegelungsteilen und mit den Betätigungselementen von Hubzylindern zur Verstellung des Laderahmenholmes 5 und des Fahrgestellholmes 6 verbunden. Die Steuervorrichtung 8 hat einen Rechner, der in Abhängigkeit der ermittelten Ist-Lage-Positionen verschiedener Chassisteile, und eines vorgegebenen Ladezustandes automatisch errechnet, welche Fahrzeugchassisteile zur verstellen sind. Dies kann der vordere Laderahmenholm 7 aber auch der hintere Fahrgestellholm 6 sein, es kann aber auch notwendig sein, daß sich Laderahmen 2 und Fahrgestell 3 relativ zueinander bewegen müssen, was in dem gezeigten Ausführungsbeispiel durch das Zugfahrzeug einzustellen ist. Dies wird auf einem Display angezeigt. Dabei kann auch die Richtung mit angegeben werden. Wird eine entsprechende Verstellung durchgeführt, wird vorher eine Bremsvorrichtung aktiviert. Die Sensoren und auch angeschlossene Ventileinheiten sind dabei so gesteuert, daß eine automatische Verriegelung von Chassisteilen aneinander und auch eine automatische Verriegelung bei Einnahme der entsprechenden Position erfolgt.

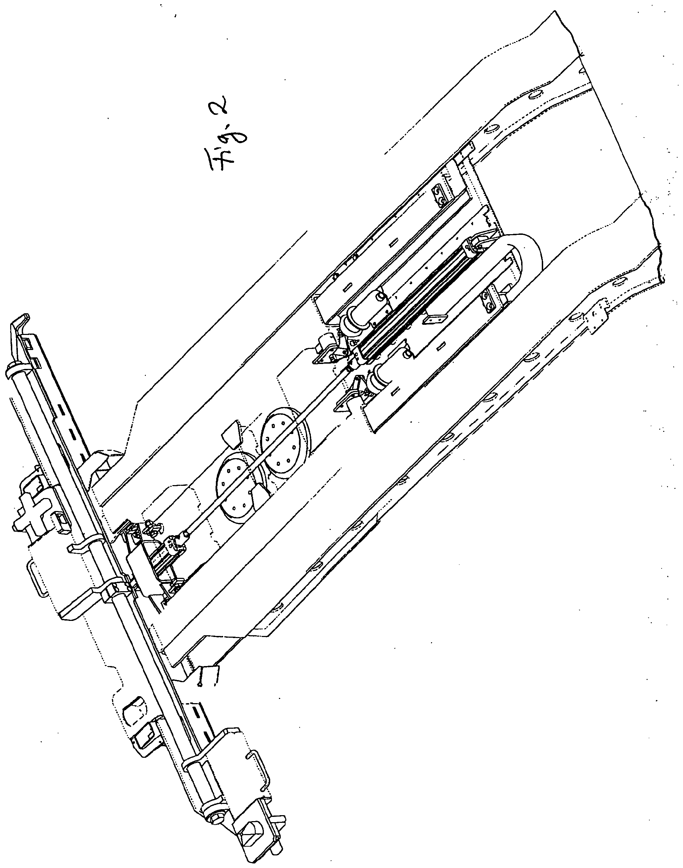

Für die Steuerung des vorderen Laderahmenholmes 7 und des hinteren Fahrgestellrahmens 6 sind zwei Tandemhubzylinderanordnungen 9 und 10 vorgesehen, die jeweils zwei Hubzylinder 9.1 und 9.2 bzw. 10.1 und 10.2 aufweisen mit jeweils unterschiedlicher Hublänge. Die jeweiligen Hubzylinder 9.1 und 9.2 sind durch eine Hubstange 9.3 bzw. 10.3 miteinander gekoppelt. Die Tandemhubzylinderanordnung 9 nach Fig. 1 und 2 zeigt Hubzylinder 9.1 und 9.2, die jeweils voll ausgefahren sind, so daß der Laderahmenholm 7 sich in der maximal ausgefahrenen Stellung befindet.

Die Hubzylinder 10.1 und 10.2 sind jeweils ganz eingefahren, so daß sich der Fahrgestellrahmen 6 in seiner eingefahrenen Position handelt. Bei den Hubzylindern 9.1 und 9.2 sowie 10.1 und 10.2 handelt es sich um Pneumatikzylinder. Andere Hubzylinder bzw. Stellmittel sind jedoch gleichermaßen geeignet. Bei 11 sind noch federbelastete Zylinder angedeutet, die mit Schwenkhebeln 12 verbunden sind, die abgewinkelt ausgebildet sind und mit einer Sperreinrichtung zusammenwirken zwecks Verriegelung von Teilen.

Sind die Hubzylinder 9.1 und 9.2 bzw. 10.1 und 10.2 betätigt worden, können sie jeweils wieder drucklos geschaltet werden.

Insgesamt ist damit ein Fahrzeugchassis 1 zur Verfügung gestellt, bei dem vollautomatisch und dabei sehr schnell und exakt für verschiedene Containergrößen und Beladungsfälle das Fahrzeugchassis einzustellen ist.

## Patentansprüche

1. Fahrzeugchassis (1) für insbesondere Container, Aufbauten oder dergleichen Ladungsbehälter mit einem über Räder (4) auf dem Erdboden abstützbaren Fahrgestell (3) und einem relativ translatorisch zu diesem bewegbaren und mit einer Zugmaschine koppelbaren Laderahmen (2), wobei der Laderahmen (2) einen vorderen, sich quer zur Fahrzeugchassislängsachse erstreckenden Laderahmenholm (5) und das Fahrgestell einen rückwärtigen, relativ zu dem Fahrgestell bewegbaren und sich quer zur Fahrchassislängsachse erstreckenden hinteren Fahrgestellholm (6) aufweist, und des weiteren eine Steuervorrichtung (8) vorgesehen ist, die mit Positionssensoren zur Erkennung der Lageposition des Fahrgestells (3), des Laderahmens (2), des vorderen Laderahmenholms (5) und des hinteren Fahrgestellholms (6) verbunden ist, wobei die Steuervorrichtung (8) in Abhängigkeit einer dedektierten Ladeposition einen Ist-Zustand ermittelt und in Abhängigkeit eines vorgebbaren Soll-Zustandes Steuersignale erzeugt, **dadurch gekennzeichnet, dass** die Verstellung des vorderen Laderahmenholms (5) und des hinteren Fahrgestellholms (6) parallel zur Fahrchassislängsachse über eine Hubmittel aufweisende Stelleinrichtung erfolgt, dass die Steuervorrichtung (8) zur Ansteuerung der als Hubzylinder (9.1, 9.2, 10.1, 10.2) ausgebildeten Hubmittel der Stelleinrichtung zur Verstellung des vorderen Laderahmenholmes (5) und des hinteren Fahrgestellholms (6) jeweils unabhängig voneinander parallel zur Fahrzeugchassislängsachse vorgesehen ist, die mit Positionssensoren zur Erkennung der Lageposition des Fahrgestells (3), des Laderahmens (2), des vorderen Laderahmenholms und des hinteren Fahrgestellholms im Hinblick auf die Lage parallel zur Fahrzeugchassislängsachse verbunden ist, wobei die Steuervorrichtung (8) in Abhängigkeit der detektierten Lagepositonen im Hinblick auf ihre Lage parallel zur Fahrzeugchassislängsachse einen Ist-Zustand ermittelt und in Abhängigkeit eines vorgegebenen Soll-Zustandes Steuersignale zur Betätigung der Hubmittel der Stelleinrichtung erzeugt, wobei des weiteren Verriegelungsmittel vorgesehen sind, die über die Steuervorrichtung (8) im Entriegelungs- und Verriegelungssinn ansteuerbar sind und wobei eine Anfahrsicherung vorgesehen ist, um ein Anfahren nur im korrekt verriegelten Zustand zu ermöglichen.

2. Fahrzeugschassis nach Anspruch 1, **dadurch gekennzeichnet, dass** über die Steuervorrichtung (8) der Bedienperson angezeigt wird, dass eine Relativbewegung zwischen Laderahmen (2) und Fahrgestell (3) mit Hilfe der Zugmaschine zu erfolgen hat.

3. Fahrzeugchassis nach Anspruch 1 oder 2, **dadurch gekennzeichnet, dass** bei Betätigung der Steuervorrichtung (8) für die Stelleinrichtung zur Verstellung des Laderahmenholmes (5) und des Fahrgestellholms (6) parallel zur Fahrzeugchassislängsachse eine Bremseinrichtung aktiviert wird.

4. Fahrzeugschassis nach einem der Ansprüche 1 bis 3, **dadurch gekennzeichnet, dass** zur Lageveränderung des vorderen Laderahmenholmes (5) und/oder des hinteren Fahrgestellholmes (6) parallel zur Fahrzeugchassislängsachse über ein Hubelement (9.3, 10.3) gekoppelte Tandemhubzylinder (9.1., 9.2., 10.1, 10.2) einer Tandemhubzylinderanordnung (9,10) vorgesehen sind.

5. Fahrzeugchassis nach Anspruch 4, **dadurch gekennzeichnet, daß** ein Tandemhubzylinder (9.1) einer Tandemzylinderanordnung (9) ortsfest an dem Laderahmen (2) bzw. an dem Fahrgestell (3) abgestützt und der andere Tandemhubzylinder (9.2) an dem Laderahmen- bzw. Fahrgestellholm (6) befestigbar ist.

6. Fahrzeugchassis nach Anspruch 4 oder 5, **dadurch gekennzeichnet, daß** einander zugeordnete Tandemhubzylinder (9.1, 9.2, 10.1, 10.2) von der Steuervorrichtung (8) in vier Schaltstellungen schaltbar sind, wonach in der der ersten Stellung beide Tandemhubzylinder eingefahren sind, in einer zweiten Stellung beide Tandemhubzylinder ausgefahren sind, in einer dritten Stellung einer der Tandemhubzylinder ausgefahren und der andere Tandemhubzylinder eingefahren und in der vierten Stellung der andere Tandemhubzylinder (9.1, 9.2, 10.1, 10.2) ausgefahren und der eine Tandemhubzylinder eingefahren ist.

7. Fahrzeugchassis nach Anspruch 6, **dadurch gekennzeichnet, daß** einander zugeordnete Tandemhubzylinder (9.1, 9.2, 10.1, 10.2) unterschiedliche Hublängen aufweisen.

8. Fahrzeugchassis nach einem der Ansprüche 5 bis 7, **dadurch gekennzeichnet daß** im verriegelten Zustand der Fahrzeugchassisteile die Hubzylinder (9.1, 9.2, 10.1, 10.2) der Tandemhubzylinderanordnung(en) drucklos schaltbar sind.

9. Fahrzeugchassis nach einem der Ansprüche 5 bis 8, **dadurch gekennzeichnet daß** Hubzylindern (9.1, 9.2) einer Tandemzylinderanordnung (9) ein federbeaufschlagtes Sperrelement (11) zugeordnet ist, das an einem abgewinkelten Betätigungsschenkel (12) angreift, das mit einem Sperrglied zwecks Feststellung und Sicherung von Laderahmenteilen zusammenwirkt.

## Claims

1. Vehicle chassis (1) in particular for containers, vehicle bodies or similar cargo containers comprising an undercarriage (3) that can be supported on the ground by means of wheels (4), and a loading frame (2) that can be moved relative to said undercarriage in a translational manner and that can be coupled to a tractor, the loading frame (2) comprising a front loading frame bar (5) that extends transversely to the vehicle chassis longitudinal axis and the undercarriage comprising a rear undercarriage bar (6) that can be moved relative to the undercarriage and that extends transversely to the vehicles chassis longitudinal axis, and in addition a controller (8) being provided which is connected to position sensors for identifying the position of the undercarriage (3), loading frame (2), front loading frame bar (5) and rear undercarriage bar (6), the controller (8) determining an actual state based on a detected loading position and generating control signals based on a predefinable target state, **characterised in that** the front loading frame bar (5) and the rear undercarriage bar (6) are shifted in parallel with the vehicle chassis longitudinal axis by means of an adjustment device comprising lifting means, **in that** the controller (8) is intended to actuate the lifting means of the adjustment device designed as lifting cylinders (9.1, 9.2, 10.1, 10.2) in order to shift the front loading frame bar (5) and the rear undercarriage bar (6) in each case independently of one another in parallel with the vehicle chassis longitudinal axis, which controller is connected to position sensors for identifying the position of the undercarriage (3), loading frame (2), front loading frame bar and rear undercarriage bar with regard to the position in parallel with the vehicle chassis longitudinal axis, the controller (8) determining an actual state, based on the detected positions, with regard to the position thereof in parallel with the vehicle chassis longitudinal axis, and generating control signals for actuating the lifting means of the adjustment device based on a predefined target state, locking means additionally being provided which can be actuated by means of the controller (8) in the unlocking and locking direction, and a start-up security system being provided in order to allow start-up only in the correctly locked state.

2. Vehicle chassis according to claim 1, **characterised in that** the controller (8) shows the operator that a relative movement between the loading frame (2) and undercarriage (3) has to take place using the tractor.

3. Vehicle chassis according to either claim 1 or claim 2, **characterised in that** a braking device is activated upon actuation of the controller (8) for the adjustment device for shifting the loading frame bar (5) and undercarriage bar (6) in parallel with the vehicle chassis longitudinal axis.

4. Vehicle chassis according to any of claims 1 to 3, **characterised in that** tandem lifting cylinders (9.1., 9.2., 10.1, 10.2) of a tandem lifting cylinder arrangement (9, 10) that are coupled via a lifting element (9.3, 10.3) are provided for changing the position of the front loading frame bar (5) and/or rear undercarriage bar (6) in parallel with the vehicle chassis longitudinal axis.

5. Vehicle chassis according to claim 4, **characterised in that** one tandem lifting cylinder (9.1) of a tandem cylinder arrangement (9) is supported in a stationary manner on the loading frame (2) or on the undercarriage (3) and the other tandem lifting cylinder (9.2) can be fastened to the loading frame or undercarriage bar (6).

6. Vehicle chassis according to either claim 4 or claim 5, **characterised in that** mutually associated tandem lifting cylinders (9.1, 9.2, 10.1, 10.2) can be switched into four switching positions by means of the coHntroller (8), both tandem lifting cylinders being retracted in the first position, both tandem lifting cylinders being extended in a second position, one of the tandem lifting cylinders being extended and the other tandem lifting cylinder being retracted in a third position, and the other tandem lifting cylinder (9.1, 9.2, 10.1, 10.2) being extended and the first tandem lifting cylinder being retracted in the fourth position.

7. Vehicle chassis according to claim 6, **characterised in that** mutually associated tandem lifting cylinders (9.1, 9.2, 10.1, 10.2) have different stroke lengths.

8. Vehicle chassis according to any of claims 5 to 7, **characterised in that**, in the locked state of the vehicle chassis parts, the lifting cylinders (9.1, 9.2, 10.1, 10.2) of the tandem lifting cylinder arrangement(s) can be switched into a pressureless state.

9. Vehicle chassis according to any of claims 5 to 8, **characterised in that** a spring-loaded blocking element (11) is assigned to lifting cylinders (9.1, 9.2) of a tandem cylinder arrangement (9), which blocking element engages on an angled actuation arm (12) which cooperates with a blocking member for the purpose of fixing and securing loading frame parts.

## Revendications

1. Châssis de véhicule (1), destiné en particulier à des conteneurs, des carrosseries ou des récipients de chargement similaires, comprenant une structure de roulement (3) pouvant s'appuyer sur le sol par le biais de roues (4) et un cadre de chargement (2) déplaçable en translation par rapport à ladite structure de roulement et pouvant être accouplé à un tracteur (2), le cadre de chargement (2) comportant un longeron avant (5) s'étendant transversalement à l'axe longitudinal (5) du châssis de véhicule et la structure de roulement comportant un longeron arrière (6) déplaçable par rapport la structure de roulement et s'étendant transversalement par rapport l'axe longitudinal du châssis, et un dispositif de commande (8) étant en outre prévu qui est relié à des capteurs de position pour détecter la position de la structure de roulement (3), du cadre de chargement (2), du longeron avant (5) et du longeron arrière (6), le dispositif de commande (8) déterminant un état réel en fonction d'une position de chargement détectée et générant des signaux de commande en fonction d'un état de consigne pouvant être prescrit, **caractérisé en ce que** le déplacement du longeron avant (5) et du longeron arrière (6) est effectué parallèlement à l'axe longitudinal du châssis par le biais d'un mécanisme de réglage comportant des moyens de levage, **en ce que** le dispositif de commande (8) est prévu pour commander les moyens de levage, conçus sous la forme de vérins de levage (9.1, 9.2, 10.1, 10.2), du mécanisme de réglage pour déplacer le longeron avant (5) et le longeron arrière (6) chacun indépendamment l'un de l'autre et parallèlement à l'axe longitudinal du châssis, lequel dispositif de commande est relié à des capteurs de position pour détecter la position de la structure de roulement (3), du cadre de chargement (2), du longeron avant et du longeron arrière en considération de la position parallèlement à l'axe longitudinal du châssis de véhicule, le dispositif de commande (8) déterminant un état réel en fonction des positions détectées en considération de sa position parallèlement à l'axe longitudinal du châssis de véhicule et générant des signaux de commande en fonction d'un état réel prescrit pour actionner les moyens de levage du mécanisme de réglage, des moyens de verrouillage étant en outre prévus qui peuvent être commandés par le biais du dispositif de commande (8) dans le sens de déverrouillage et le sens de verrouillage et une sécurité anti-démarrage étant prévue pour ne permettre le démarrage qu'à l'état correctement verrouillé.

2. Châssis de véhicule selon la revendication 1, **caractérisé en ce que** l'on indique à l'opérateur par le biais du dispositif de commande (8) qu'un mouvement relatif entre le cadre de chargement (2) et la structure de roulement (3) doit être effectué à l'aide du tracteur.

3. Châssis de véhicule selon la revendication 1 ou 2, **caractérisé en ce que**, lors de l'actionnement du dispositif de commande (8), un mécanisme de freinage est activé pour que le mécanisme de réglage déplace le longeron (5) du cadre de chargement et le longeron (6) de la structure de roulement parallèlement à l'axe longitudinal du châssis de véhicule.

4. Châssis de véhicule selon l'une des revendications 1 à 3, **caractérisé en ce que** des vérins de levage en tandem (9.1., 9.2., 10.1, 10.2), accouplés par le biais d'un élément de levage (9.3, 10.3), d'un ensemble de vérins de levage en tandem (9, 10) sont prévus pour modifier la position du longeron avant (5) et/ou du longeron arrière (6) parallèlement à l'axe longitudinal du châssis de véhicule.

5. Châssis de véhicule selon la revendication 4, **caractérisé en ce qu'**un vérin de levage en tandem (9.1) d'un ensemble de vérins de levage en tandem (9) peut s'appuyer de manière fixe sur le cadre de chargement (2) ou sur la structure de roulement (3) et l'autre vérin de levage en tandem (9.2) peut être fixé au longeron du cadre de chargement ou au longeron (6) de la structure de roulement.

6. Châssis de véhicule selon la revendication 4 ou 5, **caractérisé en ce que** des vérins de levage en tandem (9.1, 9.2, 10.1, 10.2) associés l'un à l'autre peuvent être commutés dans quatre positions de commutation par le dispositif de commande (8), à savoir : dans la première position les deux vérins de levage en tandem sont rentrés, dans une deuxième position les deux vérins de levage en tandem sont déployés, dans une troisième position un premier vérin de levage en tandem est déployé et l'autre vérin de levage en tandem est rentré, dans la quatrième position l'autre vérin de levage en tandem (9.1, 9.2, 10.1, 10.2) est déployé et le premier vérin de levage en tandem est rentré.

7. Châssis de véhicule selon la revendication 6, **caractérisé en ce que** les vérins de levage en tandem (9.1, 9.2, 10.1, 10.2) associés l'un à l'autre ont des longueurs de course différentes.

8. Châssis de véhicule selon l'une des revendications 5 à 7, **caractérisé en ce que**, lorsque les parties de châssis de véhicule sont verrouillées, les vérins de levage (9.1, 9.2, 10.1, 10.2) de l'ensemble de vérins de levage en tandem ou des ensembles de vérins de levage en tandem peuvent être commutés sans pression.

9. Châssis de véhicule selon l'une des revendications 5 à 8, **caractérisé en ce que** des vérins de levage (9.1, 9.2) d'un ensemble de vérins de levage en tandem (9) sont associés à un élément de blocage (11) à ressort qui agit sur une branche d'actionnement coudée (12) qui coopère avec l'élément de blocage pour fixer et assurer des pièces du cadre de chargement.
